# EUROPÄISCHE PATENTSCHRIFT

(11) **EP 1 052 731 B1**
(45) Veröffentlichungstag und Bekanntmachung des Hinweises auf die Patenterteilung: **11.10.2006**
(21) Anmeldenummer: 00103851.2
(22) Anmeldetag: 24.02.2000
(51) Int. Cl.: H01R 9/26

(54) **Reihenklemme**
Terminals for side by side mounting
Bornes pour montage en ligne

(30) Priorität: 14.05.1999 DE 29908612 U
(43) Veröffentlichungstag der Anmeldung: 15.11.2000
(73) Patentinhaber: Weidmüller Interface GmbH & Co., 32760 Detmold (DE)
(72) Erfinder: Rutz, Andreas, 33609 Bielefeld (DE); Schild, Wolfgang, 32049 Herford (DE)
(74) Vertreter: Dantz, Jan Henning

(56) Entgegenhaltungen:
- EP-A- 0 721 237
- DE-C- 3 923 137
- DE-U- 29 606 179
- DE-U- 29 611 912
- GB-A- 1 020 926
- US-A- 5 232 374
- US-A- 5 839 912

## Beschreibung

Die Erfindung betrifft eine Reihenklemme zur Aufnahme eines elektrischen oder elektronischen Bausteines, insbesondere zur Aufnahme eines Relaisbausteines, mit einem auf eine Tragschiene aufrastbaren Klemmenkörper, der eine Ausnehmung aufweist, in welcher der Baustein mit Hilfe eines Schwenkbügels verrastbar ist.

Aus der DE 29606179 U1 ist eine Vorrichtung zur Verriegelung von Steckergehäusen mit einem U-förmigen Bügel bekannt. Eine weitere Relay diese Art zeigt die US 5,839,912.

Aus einem internen Stand der Technik ist eine gattungsgemäße Reihenklemme bekannt, mit deren Schwenkbügel jeweils Relaisbausteine mit einer den Abmessungen des Schwenkbügels entsprechenden Größe auf dem Klemmenkörper verriegelbar sind. Dies hat den Nachteil, daß für Relaisbausteine mit anderen Abmessungen - von Interesse sind insbesondere verschiedene Bauhöhen - jeweils unterschiedliche Reihenklemmen herzustellen und zu besorgen sind.

Zum Stand der Technik wird auch die EP 0721237 A2 genannt, die einen Anschlussblock zeigt, der mit einer Hebelanordnung zu einem contour Bauteil lösbar ist.

Die Erfindung zielt darauf ab, dieses Problem zu lösen, so daß an einer Reihenklemme auch Bausteine unterschiedlicher Abmessungen - insbesondere Bausteine unterschiedlicher Bauhöhe - verriegelbar sind.

Die Erfindung erreicht dieses Ziel durch den Gegenstand des Anspruches 1.

Danach weist der Schwenkbügel wenigstens zwei Rastmittel auf, mit welchen Relaisbausteine mit verschiedenen Abmessungen am Klemmenkörper verriegelbar sind. Die Erfindung schafft somit auf einfachste Weise - nämlich durch eine einfache Umgestaltung des Schwenkbügels - die Möglichkeit dazu, die Relaisbausteine unterschiedlicher Bauhöhe am Klemmenkörper festzulegen.

Vorzugsweise umfassen die Rastmittel Rastnasen und/oder Federstege. Werden diese an verschiedenen Positionen der Schwenkbügel vorgesehen, kann jeweils wenigstens eine der Rastnasen oder einer der Federstege die Aufgabe des Arretierens eines Relaisbausteintyps bestimmter Abmessung am Klemmenkörper übernehmen.

Bevorzugt ist an der Innenseite der Grundseite des U-förmigen Schwenkbügels der Federsteg ausgebildet, so daß auf diese Weise ein Baustein arretierbar ist, dessen Bauhöhe ungefähr der freien Höhe des Schwenkbügels entspricht. Die Rastnasen werden dagegen vorzugsweise jeweils in einem unterschiedlichen Abstand zum Klemmenkörper in den Längsschenkeln des Schwenkbügels ausgebildet, so daß mit ihnen Bausteine arretierbar sind, welche ungefähr eine Bauhöhe aufweisen, welche dem Abstand zwischen der Klemmenkörperoberseite und den Rastnasen entspricht.

Bei einer anderen bevorzugten Ausführungsform ist zudem vorgesehen, daß die beiden Längsschenkel des U-förmigen Schwenkbügels in wenigstens zwei voneinander verschiedenen Schwenkwinkelstellungen in den seitlichen Ausnehmungen der Klemmenkörper festlegbar sind. In jeder der Schwenkstellungen übernehmen dann die verschiedenen Rastmittel am Schwenkbügel die Arretierung des Bausteines.

Weitere vorteilhafte Ausführungsformen der Erfindung sind den übrigen Unteransprüchen zu entnehmen.

Nachfolgend wird die Erfindung anhand von Ausführungsbeispielen unter Bezug auf die Zeichnung näher beschrieben. Es zeigt:
- Fig. 1a und b: ein erstes Ausführungsbeispiel der Erfindung, wobei in Fig. 1a und 1b jeweils Relaisbausteine mit unterschiedlichen Abmessungen auf den Klemmenkörper aufgesetzt sind;
- Fig.2a und c: den Vorgang des Aufsetzens eines Relaisbausteins auf den Klemmenkörper der Fig. 1;
- Fig. 2b: eine Ausschnittsvergößerung aus Fig. 2c;
- Fig. 3a und b: ein zweites Ausführungsbeispiel der Erfindung, wobei in Fig. 3a und 3b jeweils Relaisbausteine mit unterschiedlichen Abmessungen auf den Klemmenkörper aufgesetzt sind;

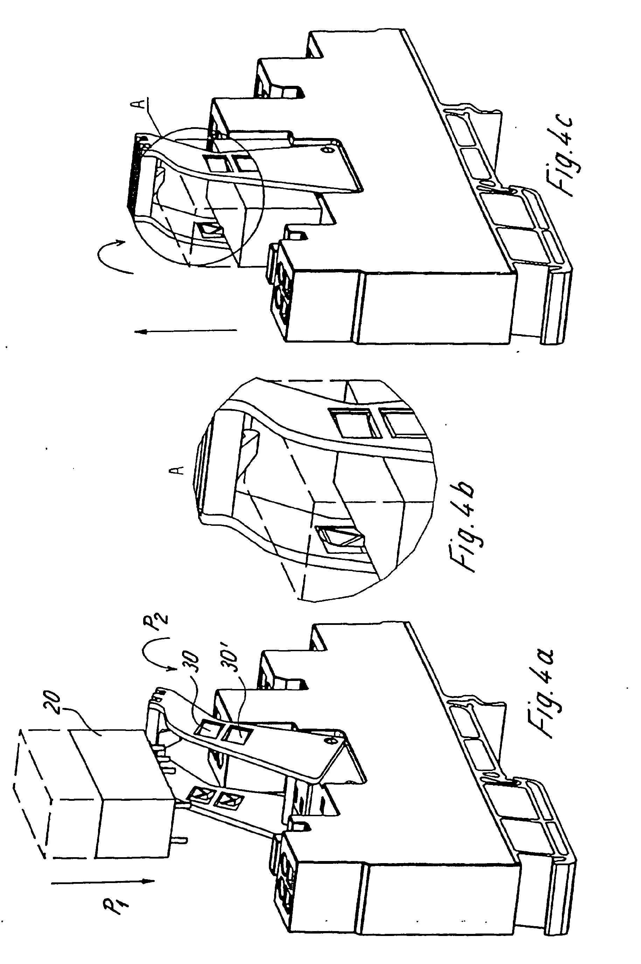

- Fig.4a und c: den Vorgang des Aufsetzens eines Relaisbausteins auf den Klemmenkörper der Fig. 3;
- Fig. 4b: eine Ausschnittsvergößerung aus Fig. 4c;
- Fig. 5a und b: ein drittes Ausführungsbeispiel der Erfindung, wobei in Fig. 5a und 5b jeweils Relaisbausteine mit unterschiedlichen Abmessungen auf die Klemmenkörper aufgesetzt sind; und
- Fig. 6: ein viertes Ausführungsbeispiel der Erfindung.

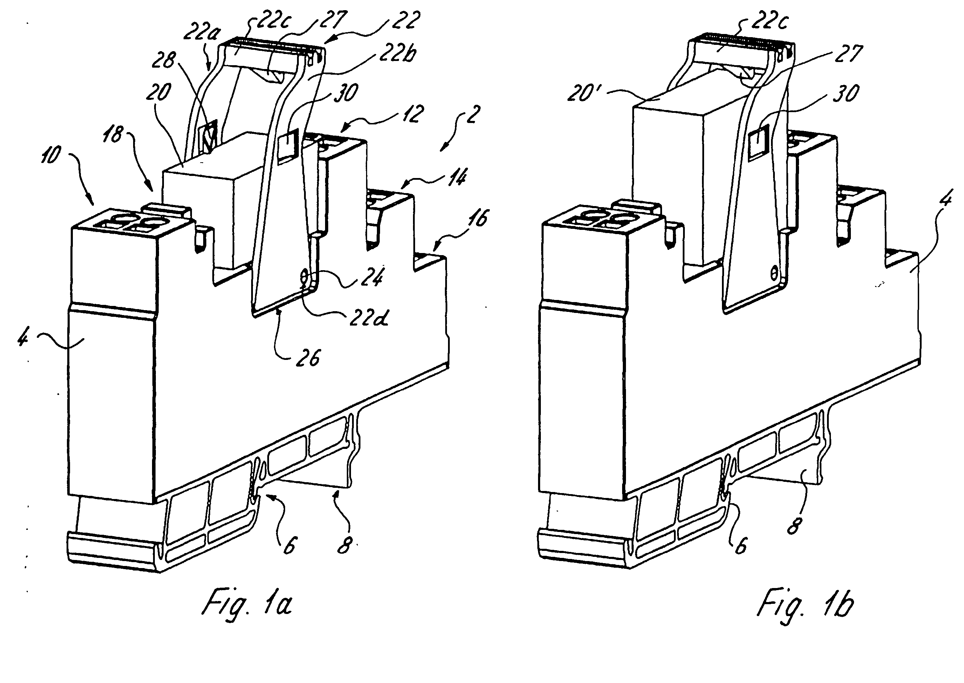

Zunächst sei das Ausführungsbeispiel der Fig. 1 erläutert. Fig. 1 zeigt eine Reihenklemme 2 mit einem Klemmenkörper 4, der Rastmittel 6, 8 zum Aufrasten des Klemmenkörpers 4 auf eine (hier nicht dargestellte) Tragschiene aufweist. Der gestuft ausgebildete Klemmenkörper 4 ist an seiner Oberseite mit mehreren Paaren von Anschlußöffnungen 10, 12, 14, 16 zum Anschluß externer Leiter versehen. Zwischen den Anschlußöffnungen 10 und 16 ist eine im wesentlichen rechtwinklige Ausnehmung 18 im Klemmenkörper 4 ausgebildet, in die ein Relaisbaustein 20 einsetzbar ist.

Der Relaisbaustein 20 wird durch einen im wesentlichen U-förmigen Schwenkbügel 22 am Klemmenkörper 4 festgelegt, welcher zwei Längsschenkel 22a, 22b sowie einen rechtwinklig zu den beiden Längsschenkeln 22a und 22b ausgerichteten Grundschenkel 22c aufweist. Der Grundabschnitt 22c des U-förmigen Schwenkbügels ist seitlich zur Haupterstreckungsebene der Längsschenkel 22a, 22b versetzt angeordnet. Die Grundseite 22c des U-förmigen Schwenkbügels ist zudem mit einem Bezeichnungsfeld 23 für eine Betriebsmittelkennzeichnung versehen.

In jeweils einer der Ecken der Endbereiche der Längsschenkel 22a, b sind jeweils Bohrungen 22d ausgebildet, in welche Lagerzapfen 24 eingreifen, die einstückig an den Klemmenkörper 4 angeformt sind. Auf diese Weise wird der U-förmige Schwenkbügel 22 schwenkbar am Klemmenkörper 4 gelagert. Die beiden Längsschenkel 22a, b sind in seitlichen Ausnehmungen 26 des Klemmenkörpers geführt und verjüngen sich vom Endbereich der Längsschenkel 22a, b zur Grundseite 22c hin, so daß sie in den Ausnehmungen 26 um einen begrenzten Winkelbetrag verschwenkbar sind.

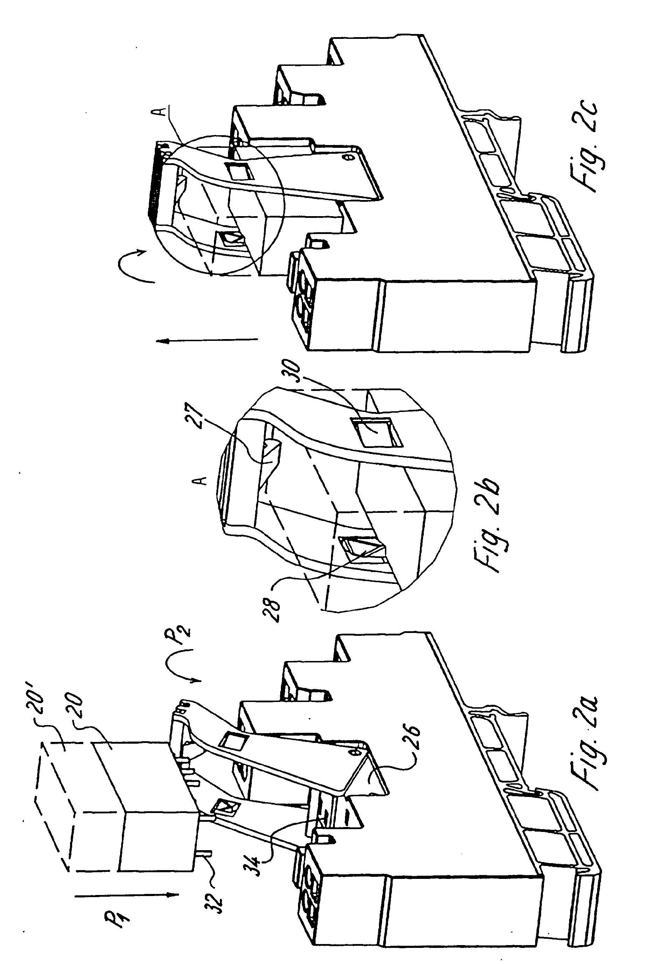

Der Grundschenkel 22c ist an seiner Innenseite, d.h. an seiner zum Klemmenkörper 4 gewandten Seite mit einem Federsteg 27 versehen. Die beiden Längsschenkel 22a, b sind derart mit zur Innenseite des U-förmigen Schwenkbügels weisenden Rastnasen 28, 30 versehen, daß die unteren, d.h. die zum Klemmenkörper 4 liegenden Seiten der Rastnasen 28, 30 den Relaisbaustein 20 am Klemmenkörper 4 festlegen. Fig. 2b zeigt dagegen das Festlegen eines größeren Relaisbausteins 20' am Klemmenkörper durch den Federsteg 27 am Grundschenkel 22c.

Nachfolgend wird die Funktion der Reihenklemme unter Bezug auf Fig. 1 näher erläutert. Gemäß Fig. 2a kann der Schwenkbügel 22 um den Lagerzapfen 24 herum in eine seitliche Schwenkstellung verschwenkt werden. Dadurch ist es möglich, den Baustein 20 in Richtung des Pfeiles P1 in die Ausnehmung 18 einzusetzen, wobei Pins 32 an der Unterseite des Relais- oder Optokopplerbausteins 20 in Öffnungen 34 des Klemmenkörpers 4 eingeführt werden. Daraufhin wird der Schwenkbügel 22 in die Stellung der Fig. 2b und 2c zurückgeschwenkt (siehe den Pfeil P2), in der die Längsschenkel 22a, b an der Grundwandung der seitlichen Ausnehmung 26 aufliegen. Dabei klemmen entweder die Rastnasen 28, 30 den Baustein 20 oder der Federsteg 27 den höheren Baustein 20' am Klemmenkörper 4 fest. Auf diese Weise können am Klemmenkörper 4 Bausteine mit zwei verschiedenen Höhen arretiert werden, was die Lagerhaltung vereinfacht, da es nicht mehr nötig ist, für diese verschiedenen Höhen von Relaisbausteinen 20 unterschiedliche Klemmenkörper bzw. Klemmenkörper mit unterschiedlichen Schwenkbügeln 22 herzustellen.

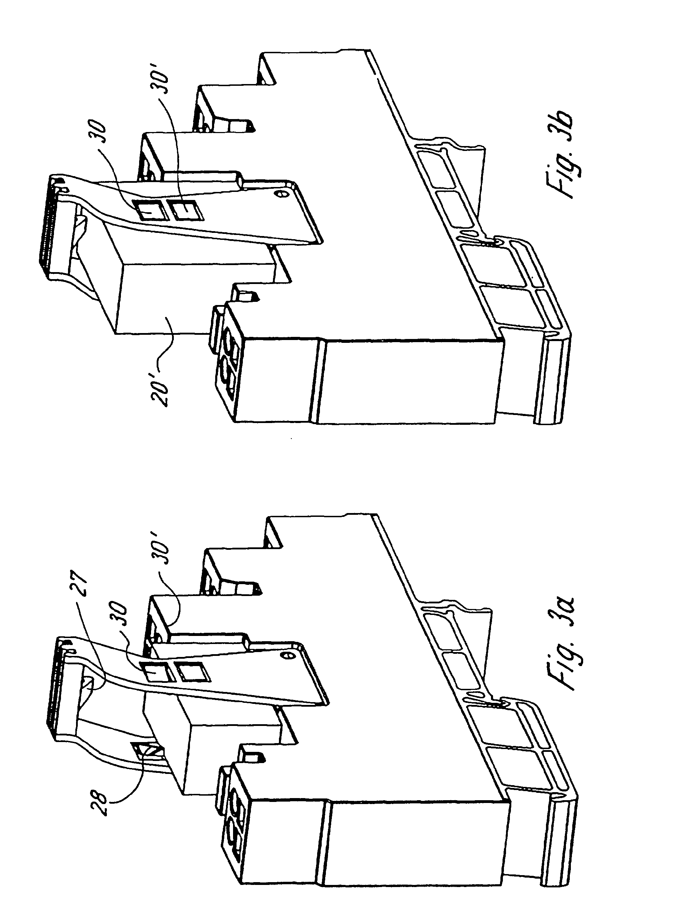

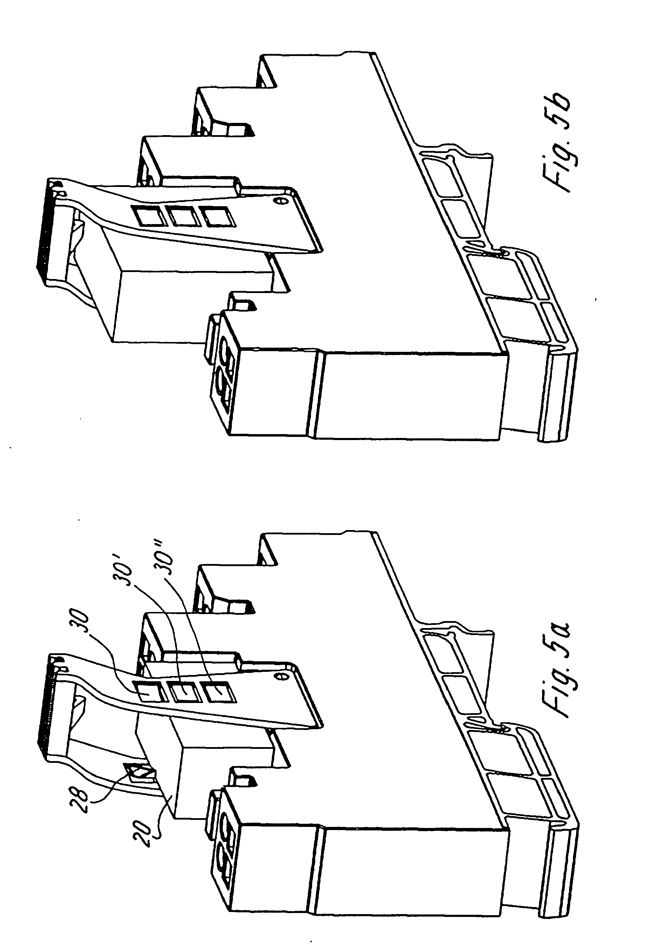

Diese Idee läßt sich nach Fig. 3 und Fig. 5 durch eine Erhöhung der Anzahl von seitlichen Rastnasen an den Längsschenkeln 22a, 22b des Schwenkbügels 22 weiter optimieren. So sind nach Fig. 3 in jedem der beiden Längsschenkel 22 jeweils zwei übereinanderliegende Federstege 28, 28' bzw. 30, 30' vorgesehen, so daß Relaisbausteine mit drei verschiedenen Bauhöhen verriegelbar sind. Nach Fig. 5 sind sogar in jedem der beiden Längsschenkel 22 drei übereinanderliegende Rastnasen 28, 28' und 28'' bzw. 30, 30' und 30'' vorgesehen, so daß an diesem Klemmenkörper Relaisbausteine mit vier verschiedenen Bauhöhen verriegelbar sind.

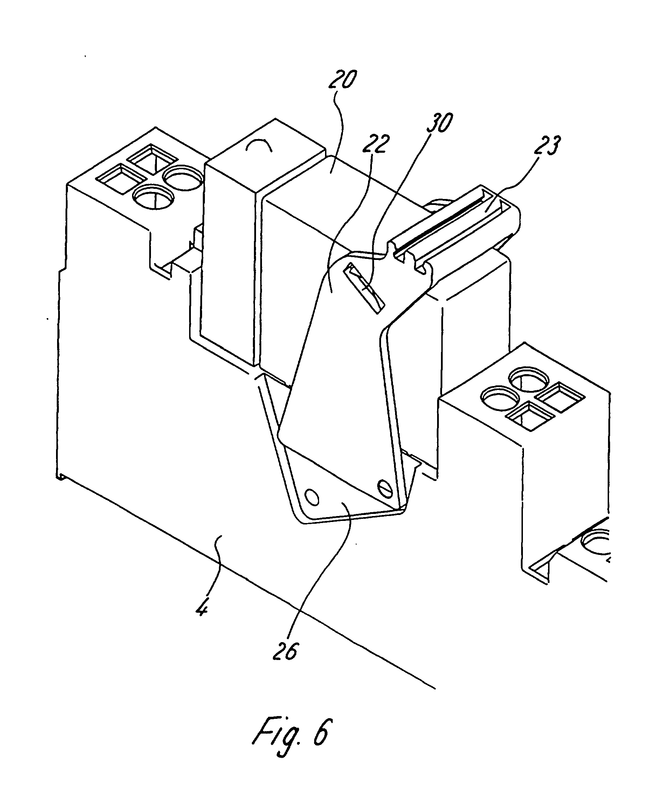

Das Ausführungsbeispiel der Fig. 6 unterscheidet sich von den vorstehend beschriebenen Ausführungsbeispielen zunächst dadurch, daß die Ausnehmung 26 relativ zur Senkrechten auf der Tragschiene bzw. relativ zur Aufsetzrichtung P1 des Bausteines 20 geneigt ausgebildet ist. Dadurch kann der Schwenkbügel 22 in zwei verschiedene Arretierstellungen verschwenkt werden. In der ersten Schwenkstellung (in Fig. 6 dargestellt) liegt er im wesentlichen parallel zur Richtung des Pfeiles und eine seiner Ekken liegt an einer der Seitenwandungen der Ausnehmung 26. In seiner zweiten Schwenkstellung wird der Schwenkbügel 22 derart ausgerichtet, daß seine Längsschenkel 22a und b an der Grundseite der Ausnehmung 26 aufliegen. Auch hier ist es im Zusammenspiel mit den Ausnehmungen 28 sowie im Zusammenspiel mit einem Federsteg entsprechend zum Federsteg 27 der vorhergehenden Figuren auf einfache Weise möglich, Relaisbausteine 20 mit zwei verschiedenen Bauhöhen am Relaiskörper 4 zu verriegeln.

### Bezugszeichen

- Reihenklemme: 2
- Klemmenkörper: 4
- Rastmittel: 6, 8
- Anschlußöffnungen: 10, 12, 14, 16
- Ausnehmung: 18
- Relaisbaustein: 20, 20'
- Bügel: 22
- Längsschenkel: 22a, 22b
- Grundschenkel: 22c
- Bohrungen: 22d
- Griffprofilierung: 23
- Lagerzapfen: 24
- Ausnehmungen: 26
- Federsteg: 27
- Rastnasen: 28, 30
- Pin: 32
- Öffnungen: 34
- Pfeile: P1, P2

## Patentansprüche

1. Reihenklemme zur Aufnahme eines elektrischen oder elektronischen Bausteines, insbesondere zur Aufnahme eines Relaisbausteines, mit einem auf eine Tragschiene aufrastbaren Klemmenkörper, der eine Ausnehmung aufweist, in welcher der Baustein mit Hilfe eines Schwenkbügels verrastbar ist, **dadurch gekennzeichnet, daß** der Schwenkbügel (22) wenigstens zwei Rastmittel (27, 28, 30) aufweist, mit welchen Relaisbausteine (20, 20') mit verschiedenen Abmessungen am Klemmenkörper (4) verriegelbar sind.

2. Reihenklemme nach Anspruch 1, **dadurch gekennzeichnet daß** die Rastmittel Rastnasen (27, 28) und/oder Federstege (30) umfassen.

3. Reihenklemme nach Anspruch 1 oder 2, **dadurch gekennzeichnet, daß** der Schwenkbügel (22) im wesentlichen U-förmig ausgebildet ist und im Endbereich der beiden zueinander parallelen Längsschenkel (22a, 22b) am Klemmenkörper schwenkbar gelagert ist.

4. Reihenklemme nach Anspruch 3 **dadurch gekennzeichnet, daß** die beiden Längsschenkel (22a, 22b) des U-förmigen Schwenkbügels in seitlichen Ausnehmungen (26) des Klemmenkörpers (4) gelagert sind und/oder daß sich die beiden Längsschenkel (22a, 22b) des U-förmigen Schwenkbügels (22) zum Grundschenkel (22c) hin verjüngen.

5. Reihenklemme nach Anspruch 3 oder 4 **dadurch gekennzeichnet, daß** jeweils mehrere nebeneinanderliegende Rastnasen (27, 28) in einem oder beiden Längsschenkeln (22a, 22b) der U-förmigen Schwenkbügel (24) ausgebildet sind.

6. Reihenklemme nach einem der vorstehenden Ansprüche, **dadurch gekennzeichnet, daß** an der Innenseite der Grundseite des U-förmigen Schwenkbügels der Federsteg (27) ausgebildet ist.

7. Reihenklemme nach einem der vorstehenden Ansprüche, **dadurch gekennzeichnet, daß** die Grundseite des U-förmigen Schwenkbügels mit einem Bezeichnungsfeld (23) für eine Betriebsmittelkennzeichnung versehen ist

8. Reihenklemme nach einem der vorstehenden Ansprüche 4 bis 7, **dadurch gekennzeichnet, daß** der Grundabschnitt (22c) des U-förmigen Schwenkbügels seitlich zur Haupterstreckungsebene der Längsschenkel (22a, 22b) versetzt ausgebildet ist.

9. Reihenklemme nach einem der vorstehenden Ansprüche, **dadurch gekennzeichnet, daß** der Klemmenkörper eine im wesentliche U-förmige Ausnehmung (18) zur Aufnahme des Bausteins aufweist.

10. Reihenklemme nach einem der vorstehenden Ansprüche 3 bis 9, **dadurch gekennzeichnet, daß** die beiden Längsschenkel (22a, 22b) des U-förmigen Schwenkbügels (22) in wenigstens zwei voneinander verschiedenen Schwenkwinkelstellungen in den seitlichen Ausnehmungen der Klemmenkörper festlegbar sind.

11. Reihenklemme nach einem der vorstehenden Ansprüche (4 bis 10), **dadurch gekennzeichnet, daß** die seitlichen Ausnehmungen (26) des Klemmenkörpers (4) relativ zur Senkrechten auf der Tragschiene geneigt ausgerichtet sind.

## Claims

1. Line-up terminal for receiving an electric or electronic structural element, in particular for receiving a relay component, with a terminal body that can be clipped onto a support rail, which comprises a recess into which the said component can be fitted with the aid of a swivelling clamp, **characterised in that** the swivelling clamp (22) comprises at least two detent element (27, 28, 30) by means of which relay components (20, 20') of various dimensions can be locked onto the terminal body (4).

2. Line-up terminal according to Claim 1, **characterised in that** the detent elements include detent catches (27, 28) and/or spring webs (30).

3. Line-up terminal according to Claims 1 or 2, **characterised in that** the swivelling clamp (22) is essentially U-shaped and is mounted to swivel on the terminal body at the end areas of the two long arms (22a, 22b) of the U.

4. Line-up terminal according to Claim 3, **characterised in that** the said two long arms (22a, 22b) of the U-shaped swivelling clamp are fitted in lateral recesses (26) of the terminal body (4) and/or the two long arms (22a, 22b) of the U-shaped swivelling clamp (22) taper towards the cross-arm (22c).

5. Line-up terminal according to Claims 3 or 4, **characterised in that** in each case a plurality of adjacent detent catches (27, 28) are formed in one or both long arms (22a, 22b) of the U-shaped swivelling clamp (22).

6. Line-up terminal according to any of the preceding claims, **characterised in that** the spring web (27) is formed on the inside of the cross-arm of the U-shaped swivelling clamp.

7. Line-up terminal according to any of the preceding claims, **characterised in that** the cross-arm of the U-shaped swivelling clamp is provided with a marking area (23) for operating equipment identification.

8. Line-up terminal according to any of the preceding Claims 4 to 7, **characterised in that** the cross-arm (22c) of the U-shaped swivelling clamp is formed laterally offset relative to the main extension plane of the long arms (22a, 22b).

9. Line-up terminal according to any of the preceding claims, **characterised in that** the terminal body has an essentially U-shaped recess (18) to receive the component.

10. Line-up terminal according to any of the preceding claims 3 to 9, **characterised in that** the two long arms (22a, 22b) of the U-shaped swivelling clamp (22) can be fixed in the lateral recesses of the terminal body in at least two swivel angle positions that differ from one another.

11. Line-up terminal according to any of the preceding Claims 4 to 10, **characterised in that** the lateral recesses (26) of the terminal body (4) are orientated at an inclination relative to a line perpendicular to the support rail.

## Revendications

1. Borne pour montage en ligne, destinée à recevoir un composant électrique ou électronique, en particulier destinée à recevoir un composant relais, avec un corps de borne encliquetable sur un rail support et qui présente un évidement, dans lequel le composant peut être encliqueté à l'aide d'un arceau pivotant, **caractérisée en ce que** l'arceau pivotant (22) présente au moins deux moyens d'encliquetage (27, 28, 30) avec lesquels des composants relais (20, 20') de différentes dimensions peuvent être verrouillés sur le corps de borne (4).

2. Borne pour montage en ligne selon la revendication 1, **caractérisée en ce que** les moyens d'encliquetage comprennent des nez d'encliquetage (27, 28) et/ou des barrettes ressorts (30).

3. Borne pour montage en ligne selon la revendication 1 ou 2, **caractérisée en ce que** l'arceau pivotant (22) est réalisé sensiblement en forme de U et est monté pivotant sur le corps de borne dans la zone d'extrémité des deux branches longitudinales (22a, 22b) mutuellement parallèles.

4. Borne pour montage en ligne selon la revendication 3, **caractérisée en ce que** les deux branches longitudinales (22a, 22b) de l'arceau pivotant en forme de U sont montées dans des évidements latéraux (26) du corps de borne (4) et/ou **en ce que** les deux branches longitudinales (22a, 22b) de l'arceau pivotant (22) en forme de U sont effilées en direction de la branche de base (22c).

5. Borne pour montage en ligne selon la revendication 3 ou 4, **caractérisée en ce qu'**à chaque fois, plusieurs nez d'encliquetage (27, 28) juxtaposés sont formés dans une ou les deux branches longitudinales (22a, 22b) de l'arceau pivotant (24) en forme de U.

6. Borne pour montage en ligne selon l'une des revendications précédentes, **caractérisée en ce que** la barrette ressort (27) est formée du côté intérieur du côté de base de l'arceau pivotant en forme de U.

7. Borne pour montage en ligne selon l'une des revendications précédentes, **caractérisée en ce que** le côté de base de l'arceau pivotant en forme de U est muni d'une zone d'identification (23) permettant l'identification d'un moyen d'exploitation.

8. Borne pour montage en ligne selon l'une des revendications 4 à 7, **caractérisée en ce que** la section de base (22c) de l'arceau pivotant en forme de U est décalée latéralement par rapport au plan principal d'extension des branches longitudinales (22a, 22b).

9. Borne pour montage en ligne selon l'une des revendications précédentes, **caractérisée en ce que** le corps de borne présente un évidement (18) sensiblement en forme de U pour recevoir le composant.

10. Borne pour montage en ligne selon l'une des revendications 3 à 9, **caractérisée en ce que** les deux branches longitudinales (22a, 22b) de l'arceau pivotant (22) en forme de U peuvent être immobilisées dans au moins deux positions angulaires de pivotement différentes l'une de l'autre dans les évidements latéraux des corps de borne.

11. Borne pour montage en ligne selon l'une des revendications 4 à 10, **caractérisée en ce que** les évidements latéraux (26) du corps de borne (4) sont inclinés par rapport à la verticale sur le rail support.
